# EUROPEAN PATENT SPECIFICATION

(11) **EP 3 034 271 B1**
(45) Date of publication and mention of the grant of the patent: **22.04.2020**
(21) Application number: 15200005.5
(22) Date of filing: 15.12.2015
(51) Int. Cl.: B29C 53/04, B29K 105/00, B29K 307/04, B29K 105/08

(54) **METHOD AND APPARATUS FOR FORMING LAMINAR COMPOSITE CHARGE**
VERFAHREN ZUR HERSTELLUNG EINER LAMINAREN ZUSAMMENGESETZTEN VERBUNDSTRUKTUR
PROCÉDÉ DE FORMATION D'UNE CHARGE COMPOSITE LAMINAIRE

(30) Priority: 19.12.2014 GB 201422784
(43) Date of publication of application: 22.06.2016
(73) Proprietor: Airbus Operations Limited, Bristol BS34 7PA (GB)
(72) Inventor: BUCKLEY, Marcel, Swindon, SN2 7HZ (GB); BROOKES, Harvey, Bristol, BS34 7PA (GB); CROSSLEY, Richard J., Nottingham, NG7 2RD (GB); LAND, Patrick, Nottingham, NG7 2RD (GB)
(74) Representative: Ribeiro, James Michael

(56) References cited:
- DE-A1-102008 042 574
- GB-A- 996 025
- JP-A- H07 195 509
- JP-A- 2000 229 353
- US-A- 4 334 947
- US-A- 4 955 803

## Description

### FIELD OF THE INVENTION

The present invention relates to a method of forming a laminar fibre-reinforced composite charge, and associated apparatus.

### BACKGROUND OF THE INVENTION

Bending a laminar fibre-reinforced composite charge can cause wrinkles or other undesirable artefacts to form in the charge, particularly if the charge is large and/or has varying thickness and/or a complex outer profile.

A known method of bending a laminar fibre-reinforced composite charge is described in US-A-2013/0266431. A flange is formed by advancing a movable block of a mould to create a first bend around a female moulding tool, and a second bend around the movable block. The flange has a proximal portion between the first and second bend, and a distal portion between the second bend and a free edge. The distal portion is pressed against the movable block by a force resulting from atmospheric pressure acting on an evacuated vacuum bag membrane.

A known method and apparatus for the heat forming of synthetic resinous sheet material is described in GB996025.

### SUMMARY OF THE INVENTION

A first aspect of the invention provides a method of forming a charge, the charge comprising a plurality of layers of fibre-reinforced composite material, the method comprising: clamping a first part of the charge with a clamp, a free part of the charge protruding from the clamp to a free edge; contacting the free part of the charge with a forming roller; and advancing the forming roller across a die so that it bends the free part of the charge over a convex corner of the die, wherein as the forming roller advances across the die it rotates about an axis of rotation which also advances across the die.

As the forming roller advances across the die it presses the free part of the charge against a mould surface of the die, unlike in US-A-2013/0266431 in which the proximal portion of the charge is not pressed against the female moulding tool. This pressure enables the free part of the charge to be moulded into a complex shape following the contour of the mould surface. The use of a forming roller (rather than a sliding block as in US-A-2013/0266431) means that there is a rolling interaction with the charge rather than a sliding motion. This rolling interaction enables the forming roller to press the charge against the mould surface with a pressure which is higher and/or more closely controlled than a pressing device which slides over the charge (such as the sliding block in US-A-2013/0266431).

DE -A- 102008042574 discloses a method and an apparatus for forming a charge.

The charge comprises an outer layer and an inner layer, the plurality of layers of fibre-reinforced material are positioned between the inner and outer layers, the forming roller forms a first bend with the outer layer on the outside of the first bend as it bends the free part of the charge over the convex corner of the die, and the method further comprises: contacting the inner layer with a guide; bending the free part of the charge away from the mould surface of the die to form a second bend with the inner layer on an outside of the second bend; and simultaneously advancing the forming roller and the guide across the die so that they progressively draw the free part of the charge across the mould surface, the forming roller presses the inner layer of the charge against the mould surface, and the second bend moves towards the free edge. Forming the two opposite bends in the charge means that the outer layer alternates between being in tension as it passes round the first bend and in compression as it passes round the second bend (and vice versa for the inner layer).

The guide may be a low friction pad (or other non-rotating structure which contacts the charge with a sliding interaction) or it may be a guiding roller. As the guiding roller advances across the die it rotates about an axis of rotation which also advances across the die.

The forming roller may be retracted from the charge before it reaches the free edge of the charge, but more typically it presses the free part of the charge against the mould surface of the die from the convex corner of the die all the way to the free edge of the charge.

In some embodiments only a single forming roller is used to bend the free part of the charge over the convex corner of the die. In other embodiments the method comprises: contacting the free part of the charge with a plurality of forming rollers; and simultaneously advancing the forming rollers so that they bend the free part of the charge over the convex corner of a die and press the free part of the charge against the mould surface of the die, wherein as each forming roller advances across the die it rotates about an axis of rotation which also advances across the die, and at least one of the forming rollers moves relative to the other forming rollers as they press the free part of the charge against the mould surface of the die. This relative movement between the forming rollers enables them to form the charge over a die with a complex profile. For instance one of the forming rollers may rotate about its axis of rotation at a different rate to the other forming rollers as they press the free part of the charge against the mould surface of the die, and/or the axis of rotation of one of the forming rollers may move (e.g. translate and/or tilt) relative to the axes of rotation of the other forming rollers as they press the free part of the charge against the mould surface of the die.

The charge may be formed at ambient temperature, but more typically the charge is heated as the forming roller advances across the die, for instance by a heating element which is integrated into the mould surface of the die and/or a heating element which is integrated into the forming roller.

Optionally the free part of the charge is pre-heated before it is bent across the convex corner of the die, for instance by contact heaters, one or more radiation heaters (such as infrared heaters), or convection heaters (which blow hot air onto the charge).

The charge comprises a plurality of layers of fibre-reinforced composite material. Typically each layer comprises a set of fibres impregnated with an uncured matrix material. The fibres in each layer may be unidirectional, or may be woven for example. The matrix material may be a thermosetting matrix such as epoxy resin for example. The fibres may be made of carbon or any other suitable reinforcement material.

Typically the method further comprises comprising heating the charge to a curing temperature after the free part of the charge has been bent over the convex corner of the die, so that the fibre-reinforced composite material cures. The curing temperature is typically greater than the temperature of the charge as the free part of the charge is bent over the convex corner of the die. Typically the curing temperature is greater than 150°C. Typically the charge remains in contact with the die as it is heated to the curing temperature.

A second aspect of the invention provides a method of forming a charge, the method comprising: clamping a first part of the charge with a clamp, a free part of the charge protruding from the clamp to a free edge of the charge, wherein the free part of the charge comprises an inner layer, an outer layer and a plurality of internal layers of fibre-reinforced composite material between the inner and outer layers; contacting the outer layer with a forming roller; contacting the inner layer with a guide; bending the free part of the charge over a convex corner of a die with the forming roller to form a first bend with the outer layer on an outside of the first bend; bending the free part of the charge away from a mould surface of the die with the guide to form a second bend with the inner layer on an outside of the second bend; and simultaneously advancing the forming roller and the guide across the mould surface so that they progressively draw the charge across the mould surface, the forming roller presses the inner layer of the charge against the mould surface, and the second bend moves towards the free edge of the charge, wherein as the forming roller advances across the die it rotates about an axis of rotation which also advances across the die.

A third aspect of the invention provides apparatus for forming a charge by the method of the second aspect, the apparatus comprising: a clamp for clamping the first part of the charge; a support; a forming roller carried by the support; a forming roller actuator arranged to move the forming roller relative to the support to bring the forming roller into contact with an outer layer of the charge; a guide carried by the support; a guide actuator arranged to move the guide relative to the support to bring the guide into contact with an inner layer of the charge, a die with a convex corner and a mould surface; and a support actuator arranged to move the support across the die to form the charge so that the free part of the charge is bent over the convex corner of a die with the forming roller to form a first bend with the outer layer on an outside of the first bend, wherein the forming roller actuator is different from the support actuator, the free part of the charge is bent away from the mould surface of the die with the guide to form a second bend with the inner layer on an outside of the second bend, the forming roller and the guide progressively draw the charge across the mould surface, the forming roller presses the inner layer of the charge against the mould surface, and the second bend moves towards the free edge of the charge.

The support may carry a single forming roller or a plurality of forming rollers. Where plural rollers are provided then they may be moved independently by a respective plurality of forming roller actuators, or more preferably they are mounted to a roller carrier which is carried by the support, and the forming roller actuator is arranged to move the roller carrier relative to the support to bring the forming rollers into contact with the outer layer of the charge.

Each forming roller may be mounted to the roller carrier by a flexible mount (such as a spring) which enables an axis of rotation of the forming roller to move relative to the roller carrier and relative to the other forming rollers.

Typically each forming roller can rotate independently of the other forming rollers.

Preferably at least some of the layers of fibre-reinforced composite material slide relative to each other as the charge is formed. The method has been found to permit such sliding without the formation of significant wrinkles or other undesirable artefacts.

The forming roller actuator may comprise for example a linear hydraulic actuator, a linear electric actuator, or any other suitable type of actuator.

The guide actuator may comprise for example a linear hydraulic actuator, a linear electric actuator, or any other suitable type of actuator.

The support actuator may comprise, for example, a robot arm or any other suitable type of actuator.

### BRIEF DESCRIPTION OF THE DRAWINGS

Embodiments of the invention will now be described with reference to the accompanying drawings, in which:
Figure 1 is a schematic view of apparatus for bending a composite charge;
Figure 2 shows the apparatus pre-heating a composite charge;
Figure 3 shows the rollers contacting the charge;
Figure 4 shows a first stage of a forming operation;
Figure 5 shows a second stage of the forming operation;
Figure 6 shows a third stage of the forming operation;
Figure 7 shows the finished article;
Figure 8 is a schematic view of apparatus for forming a composite charge according to a second embodiment of the invention;
Figure 9 shows an alternative end effector with plural forming rollers;
Figure 10 shows a U-shaped roller carrier;
Figure 11 shows a roller unit;
Figure 12 is a schematic drawing showing an end effector with three forming rollers pressing a charge onto a horizontal part of a mould surface;
Figure 13 shows the three rollers at a later time in the forming process;
Figure 14 is an exploded view of an alternative roller unit; and
Figure 15, which is not an embodiment of the present invention, is a schematic view of apparatus for forming a composite charge with a forming roller but no guiding roller.

### DETAILED DESCRIPTION OF EMBODIMENT(S)

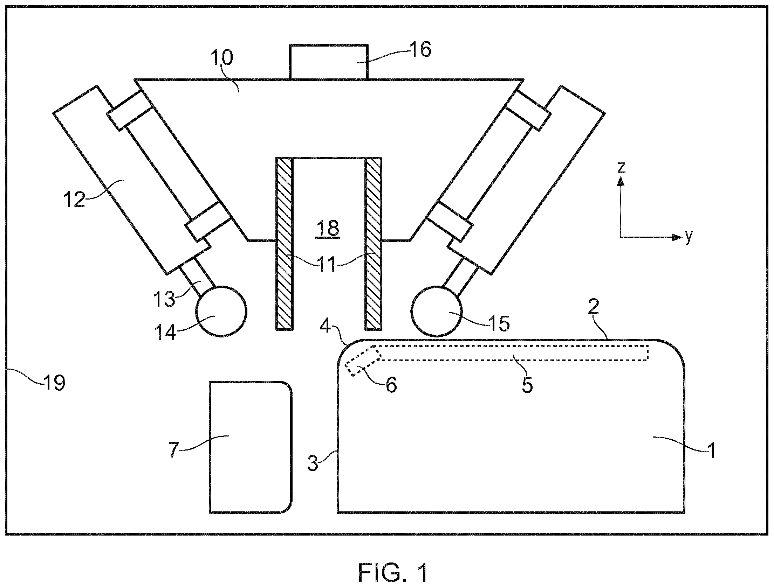

Apparatus for forming a composite charge shown in Figure 1 comprises a die 1 with a mould surface 2, a clamping surface 3, and a convex corner 4 where the surfaces 2, 3 meet. The die 1 may be made of any suitable material such as the nickel-iron alloy Invar (FeNi36).

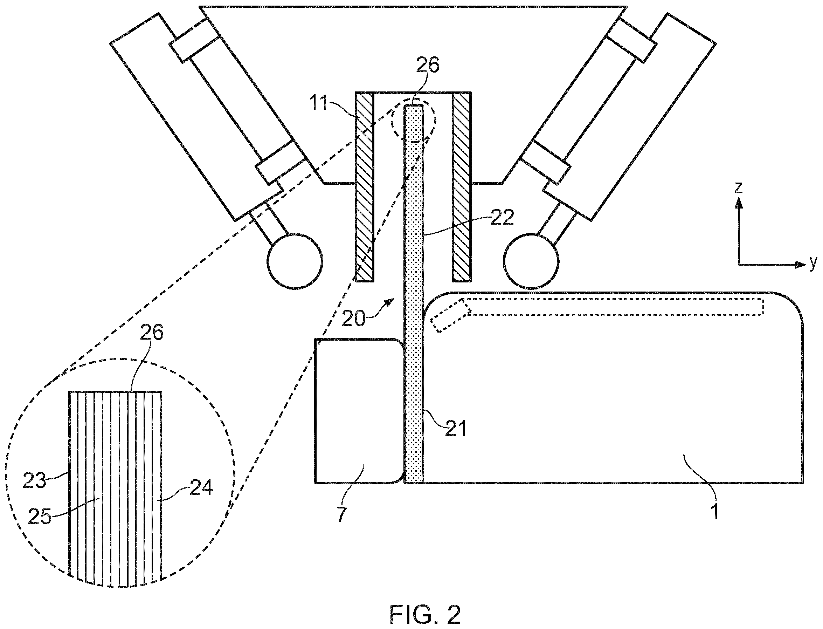

An uncured composite charge 20 shown in Figure 2 is removed from storage, and a clamp 7 is moved towards the clamping surface 3 to clamp a first part 21 of the composite charge 20 between them.

The charge 20 comprises an outer layer 23, an inner layer 24 and a plurality of internal layers 25. The layers 23-25 all terminate at a free edge 26 of the charge. Each internal layer 25 comprises a set of uni-directional carbon fibres impregnated with an uncured epoxy resin matrix (known conventionally as a "pre-preg"). The inner and outer layers 23, 24 may also be pre-preg layers, or they may be non-composite release layers.

Returning to Figure 1: a support 10 is suspended above the die 1 on a robot arm 16 which can move left/right and up/down. The support 10 carries a pair of infrared heaters 11 with a gap 18 between them. The support also carries a forming roller 14 and a guiding roller 15. Each roller 14, 15 is carried on the end of a respective rod 13 of a respective linear roller actuator 12. The rollers 14, 15 may be made of a compliant material such as neoprene rubber, or a hard material such as polytetrafluoroethylene (PTFE).

Multiple heaters 5, 6 (in this case two heaters, although there may be more) are embedded within the die 1. The heater 5 heats the mould surface 2 of the die and the heater 6 heats the convex corner 4 of the die. The heaters 5, 6 may be electric heaters, or they may use water, oil or air as a heating medium.

In a first step, the infrared heaters 11 are turned on to pre-heat a free part 22 of the charge 20 in the gap 18 as shown in Figure 2. The heaters 5, 6 are also turned on to pre-heat the die 1. The apparatus is enclosed within a cowl or enclosure 19 (shown in Figure 1) to enable the charge to come up to temperature quickly. Optionally the enclosure 19 may be warmed by convection with hot air.

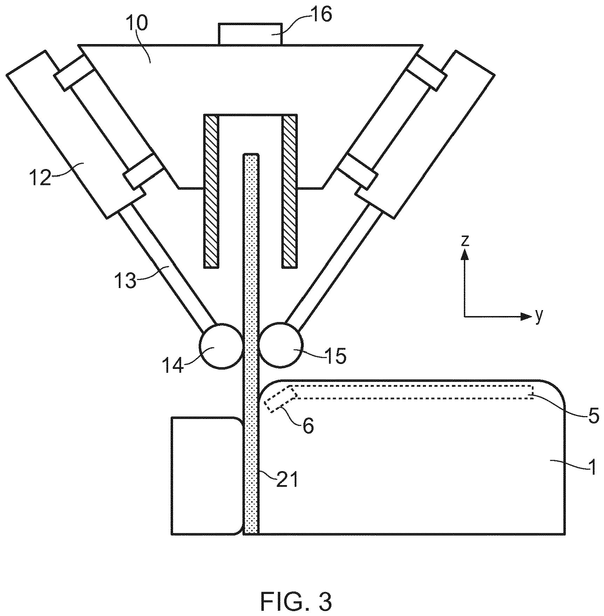

When the charge 20 is up to temperature (dependent on material type, about 70-80°C) then the support 10 is moved up by the robot arm 16 so that the rods 13 can be extended as shown in Figure 3, bringing the forming roller 14 into contact with the outer layer 23 on one side of the charge and the guiding roller 15 into contact with the inner layer 24 on the opposite side of the charge. After the rollers 14, 15 have contacted the charge, the roller actuators 12 continue to apply force so that the rollers 14, 15 compress the charge between them.

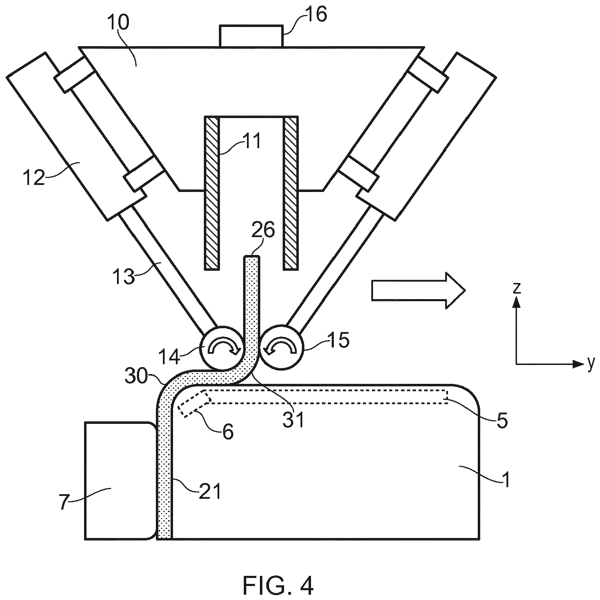

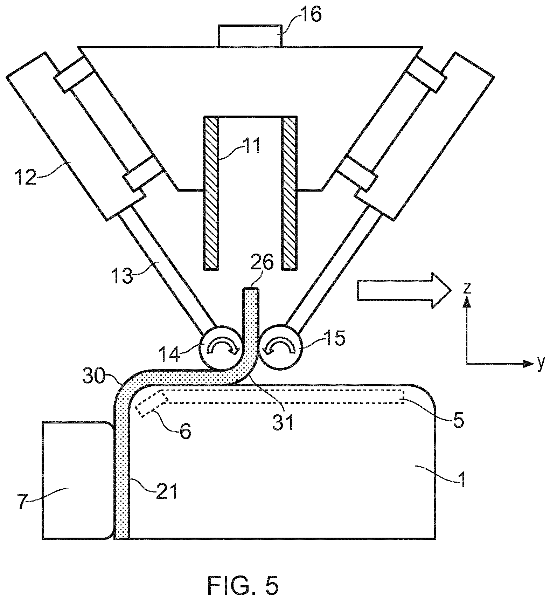

Next the robot arm 16 moves to the right so that the rollers 14, 15 simultaneously advance across the mould surface 2 as shown in Figures 4-7. The forming roller 14 bends the free part of the charge over the convex corner of the die to form a +90° bend 30 with the outer layer 23 on an outside of the bend 30. The free part of the charge is also bent away from the mould surface by the guiding roller to form a -90° bend 31 with the inner layer 24 on an outside of the bend 31. The rollers progressively draw the charge across the mould surface, and as they do so the forming roller 14 presses the inner layer 24 of the charge against the mould surface 2 and the second bend 31 moves towards the free edge 26 of the charge. The rollers 14, 15 rotate in opposite directions (as indicated by the arrows in Figure 4 and 5) about their respective axes of rotation as they move across the die so there is no sliding between the rollers 14, 15 and the charge as it is drawn through the gap between them.

Although the mould surface 2 is indicated as flat in the drawings, it may have a complex non-planar shape with ramps, indentations etc. As mentioned above, the forming roller 14 presses the inner layer 24 of the charge against the mould surface 2. This pressure enables the charge to be moulded into a complex shape following the contour of the mould surface 2. The use of a forming roller 14 means that there is a rolling interaction with the charge rather than a sliding motion. This rolling interaction enables the forming roller 14 to press the charge against the mould surface with a pressure which is higher and/or more closely controlled than a pressing device which slides over the charge.

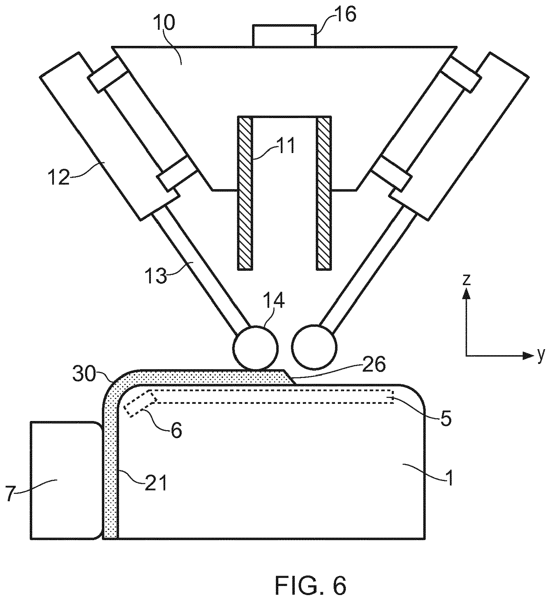

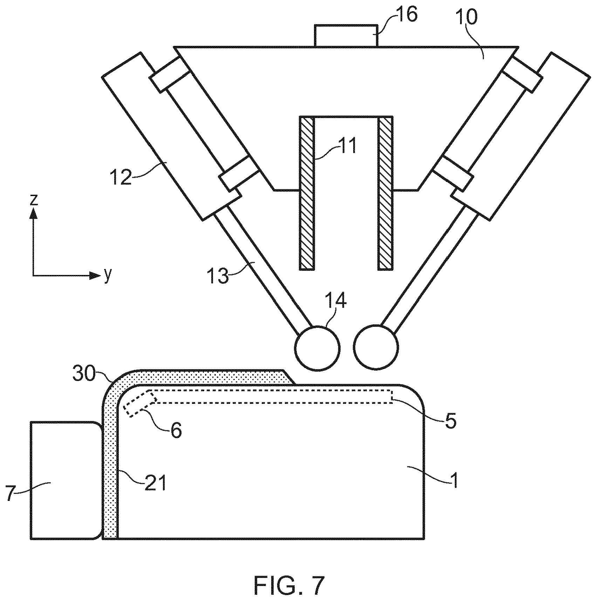

At least some of the layers 23-25 of the charge slide relative to each other as the charge is bent, but the double curvature of the charge during the forming process means that there is no "book-ending" of the free edge 26 of the charge, so in Figures 4 and 5 the free edge 26 of the charge is at a right angle to its faces. As the free edge 26 of the charge passes through the gap between the rollers 14, 15 it adopts a "book-end" angled profile shown in Figures 6 and 7.

The robot arm 16 moves sufficiently slowly that the fibres in compression (on the insides of the bends 30, 31) and the fibres in tension (on the outsides of the bends 30, 31) can slide relative to each other, and the fibres do not become damaged or wrinkled. The speed of movement of the robot arm 16 may be controlled by a closed-loop control system which measures strain rates with a force torque sensor (not shown) mounted between the robot arm 16 and the support 10 and uses these measurements as inputs into a control system (not shown). The control system reduces the speed of movement of the robot arm 16 if the strain rates measured by the force torque sensor become too high.

The clamp 7 remains fixed in place so that the first part 21 of the charge does not move relative to the die 1 as the charge is bent.

The heaters 5, 6 in the die remain turned on during the forming process so that the charge 2 is heated as it is bent over the corner 4 and pressed onto the mould surface 2.

After the charge has passed between the gap between the rollers 14, 15 as shown in Figure 6, the robot arm 16 continues to move to the position shown in Figure 7 so that the charge is pressed into contact with the mould surface 2 by the forming roller 14 all the way to the free edge 26 of the charge. Thus the second bend 31 is removed, leaving only the first bend 30 as shown in Figure 7.

The clamp 7 is then retracted, and the bent charge shown in Figure 7 remains on the die until all subsequent manufacturing operations have been carried out including curing, at which point the final component is de-moulded.

The charge is cured by laying a vacuum bagging film onto the charge, along with various other layers such as a breather fabric and release film); applying a vacuum so that pressure is applied to the charge; and simultaneously raising the temperature to a curing temperature of approximately 180° so that the epoxy resin matrix material in the charge cures.

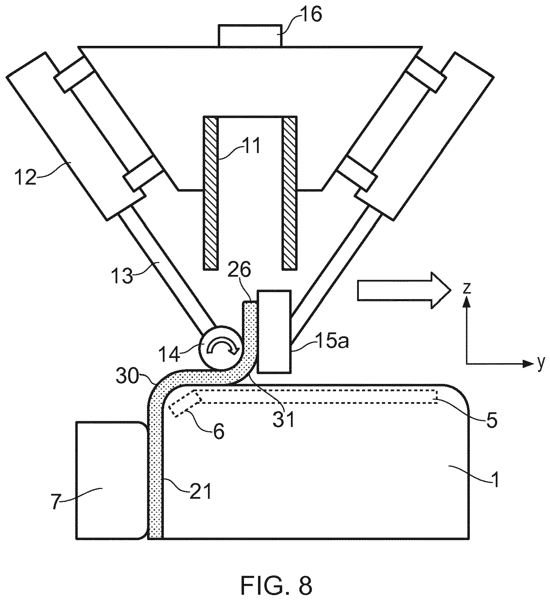

Figure 8 shows an alternative embodiment of the invention in which the guiding roller 15 is replaced by a low-friction guiding plate 15a which performs a similar guiding function to the roller 15 but engages the charge with a sliding action rather than a rolling action.

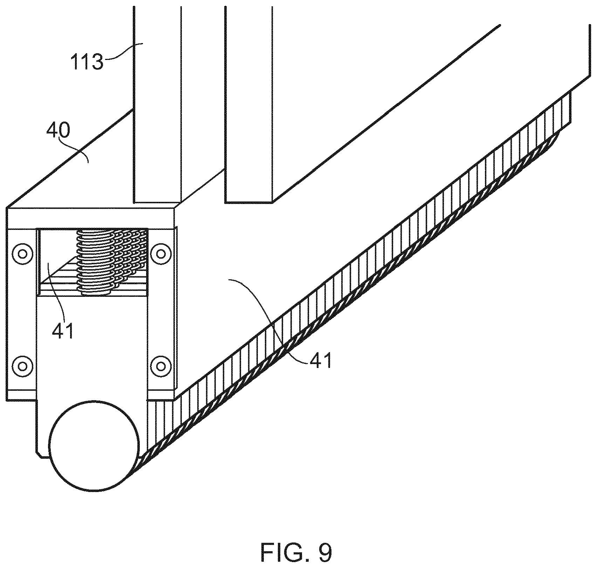

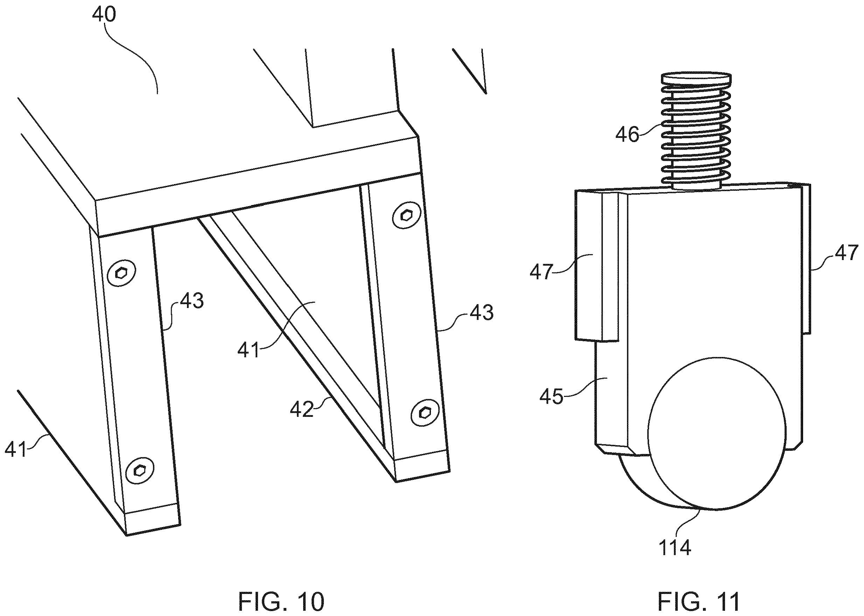

Figure 9 shows a roller assembly which can be substituted for the single forming roller 14 shown in the previous embodiments. In the example of Figure 9 the rod 13 is substituted by an actuation plate 113 which carries a U-shaped roller carrier with a base 40 and a pair of carrier rails 41. As shown in Figure 10, each carrier rail 41 has a flange 42 at its lower edge, and a retainer plate 43 at each end. A line of roller units are carried by the roller carrier 40, 41, one of the roller units being shown in Figure 11. Each roller unit comprises a carrier segment 45 which is coupled to the base 40 of the roller carrier by a coil spring 46 which can expand and contract to enable the carrier segment 45 to move between an extended position and a retracted position.

Each carrier segment 45 has a pair of tabs 47 which abut the flange 42 when the carrier segment 45 is in its fully extended position. The wings 47 of the roller units at each end of the line abut the retainer plates 43.

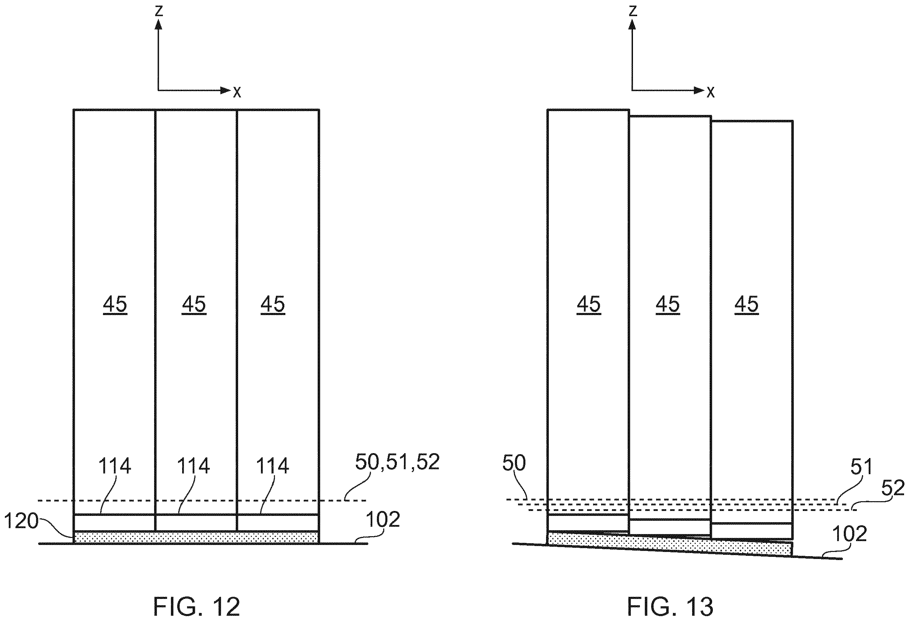

Each carrier segment 45 carries a respective forming roller 114 which is coupled to the carrier segment by an external bearing (not shown) which enables the forming roller 114 to rotate about an axis of rotation shown in Figure 12. Figure 12 is a schematic drawing showing an end effector with just three forming rollers 45 pressing a charge 120 onto a horizontal part of a mould surface 102. In this case the axes of rotation 50-52 of the three rollers are co-linear and parallel to the mould surface 102. Figure 13 shows a view of the three rollers 144 at a later time in the forming process when the mould surface 102 has become angled and the three axes of rotation 50-52 have become offset so that they are no longer co-linear (although they all remain parallel with each other and perpendicular to the direction of motion of the support 40, 41 which is moving in the Y-direction, out of the plane of Figures 12 and 13).

Optionally the surfaces of the forming rollers 114 may be made of a compliant material such as neoprene rubber in order to reduce strongly defined witness marks. Also the edges of the forming rollers 114 may have a radius for a similar purpose.

As shown in Figure 11, each forming roller 114 is mounted to the roller carrier 40, 41 by a flexible mount (in this case, a coil spring) which enables the axis of rotation of the forming roller to move relative to the roller carrier and relative to the other forming rollers. Furthermore, each forming roller 114 can rotate on its respective external bearing independently of the other forming rollers 114 so it can rotate at a different rate if required to accommodate ramps or other undulations in the mould surface 102.

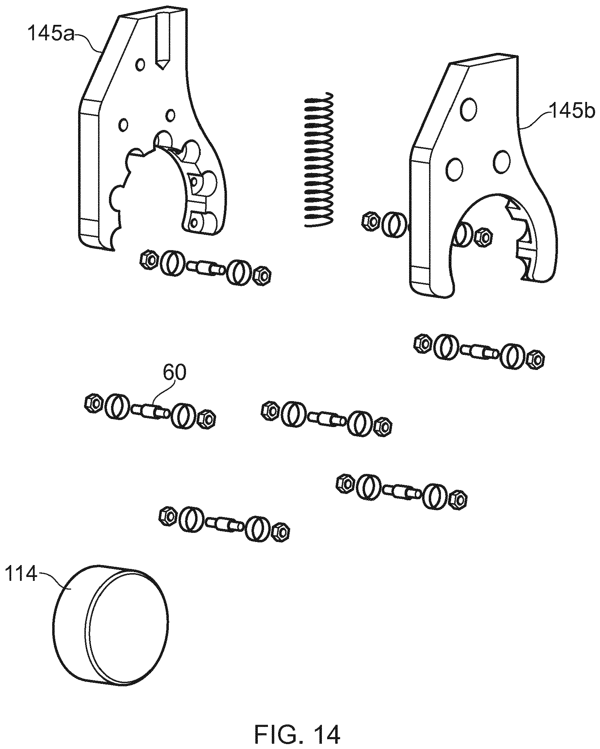

Figure 14 is an exploded view of an alternative roller unit which shows the external bearing. The carrier segment is formed by two halves 145a,b which between them carry seven roller-bearings 60 which engage the periphery of the forming roller 114.

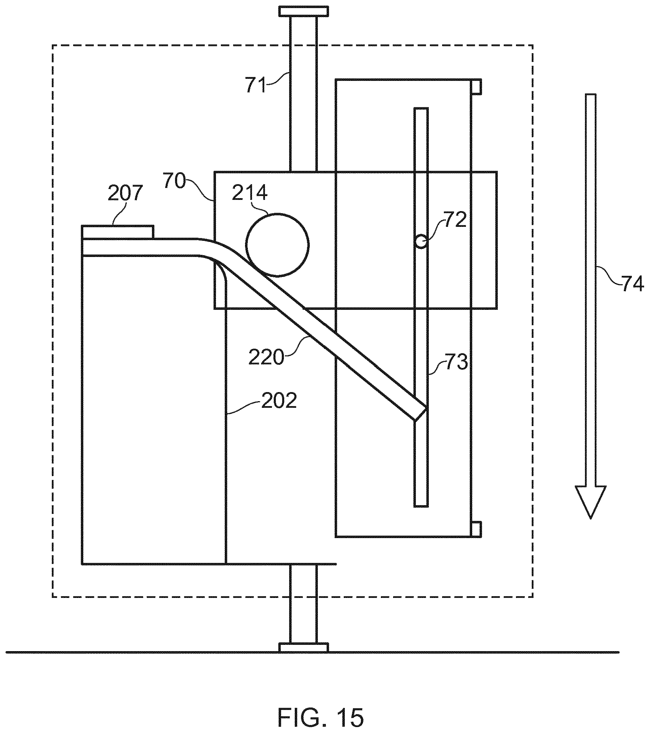

Figure 15 is a schematic view of apparatus for forming a composite charge according to a further example, which is not an embodiment of the present invention. Features equivalent to the features of the embodiment of Figure 1 are given the same reference numeral incremented by 200, so will not be described again. The forming roller 214 is carried on a roller carrier 70 which is pushed by a ram 71. The roller carrier 70 carries a cam follower 72 which runs along a cam groove 73. In the example of Figure 15 the cam groove 73 is straight (giving a linear motion 74 to the axis of rotation of the roller 214) but optionally it may be curved to account for undulations in the mould surface 202. In the example of Figure 15 there is a forming roller 214 but no guide 15, 15a, so only a single bend is formed in the charge 220 as it is formed.

Figure 15 shows the forming roller 214 mid-way through formation of the bend around the convex corner of the die. After the bend has been formed, the forming roller presses the charge 214 all the way to its free edge against the mould surface 202 with a pressure dictated by the thickness of the charge 220, the compliance of the material forming the roller 214, and the distance between the cam groove 73 and the mould surface 202.

The speed of the motion 74 may be controlled by a closed-loop control system which measures strain rates with a strain gauge (not shown) mounted in the ram 71 and uses these measurements as inputs into a control system (not shown). The control system reduces the speed of the motion 74 if the measured strain rates become too high.

Although the invention has been described above with reference to one or more preferred embodiments, it will be appreciated that various changes or modifications may be made without departing from the scope of the invention as defined in the appended claims.

## Claims

1. A method of forming a charge, the charge comprising a plurality of layers of fibre-reinforced composite material, the method comprising:
clamping a first part (21) of the charge with a clamp (7), a free part (22) of the charge protruding from the clamp to a free edge;
contacting the free part of the charge with a forming roller (14); and
advancing the forming roller across a die (1) so that it bends the free part of the charge over a convex corner (4) of the die,
wherein as the forming roller advances across the die it rotates about an axis of rotation which also advances across the die, and
wherein the charge comprises an outer layer (23) and an inner layer (24), the plurality of layers of fibre-reinforced material are positioned between the inner and outer layers, and the forming roller (14) forms a first bend (30) with the outer layer on the outside of the first bend as it bends the free part of the charge over the convex corner of the die, wherein as the forming roller advances across the die it presses the free part of the charge against a mould surface (2) of the die, and in that the method further comprises:
contacting the inner layer with a guide (15);
bending the free part of the charge away from the mould surface of the die to form a second bend (31) with the inner layer on an outside of the second bend; and
simultaneously advancing the forming roller (14) and the guide (15) across the die so that they progressively draw the free part of the charge across the mould surface, the forming roller presses the inner layer of the charge against the mould surface, and the second bend moves towards the free edge.

2. The method of claim 1, wherein the guide comprises a guiding roller (15), and as the guiding roller advances across the die it rotates about an axis of rotation which also advances across the die.

3. The method of claims 1 or 2, wherein as the forming roller (14) advances across the die it presses the free part of the charge against the mould surface of the die from the convex corner of the die to the free edge of the charge.

4. The method of any of claims 1 to 3, wherein the method comprises:
contacting the free part of the charge with a plurality of forming rollers (114); and
simultaneously advancing the forming rollers so that they bend the free part of the charge over the convex corner of a die and press the free part of the charge against the mould surface of the die,
wherein as each forming roller advances across the die it rotates about an axis of rotation which also advances across the die, and
wherein at least one of the forming rollers moves relative to the other forming rollers as they press the free part of the charge against the mould surface of the die.

5. The method of any preceding claim, further comprising heating the charge as the forming roller advances across the die.

6. The method of any preceding claim, further comprising pre-heating the free part of the charge before it is bent across the convex corner (4) of the die.

7. The method of any preceding claim, wherein the plurality of layers of fibre-reinforced composite material comprise four or more layers of fibre-reinforced composite material.

8. Apparatus for forming a charge by the method of claim 1, the apparatus comprising:
a clamp (7) for clamping the first part of the charge;
a support (10);
a forming roller (14) carried by the support;
a forming roller actuator (12) arranged to move the forming roller relative to the support to bring the forming roller into contact with an outer layer of the charge;
a die (1) with a convex corner and a mould surface; and
a support actuator (16) arranged to move the support across the die to form the charge, further comprising :
a guide (15) carried by the support; and
a guide actuator arranged to move the guide relative to the support to bring the guide into contact with an inner layer of the charge **characterised in that** the forming roller actuator (12) is different from the support actuator (16).

9. The apparatus of claim 8, comprising a plurality of forming rollers (114) carried by the support.

10. The apparatus of claim 9, wherein the plurality of forming rollers are mounted to a roller carrier which is carried by the support, and the forming roller actuator is arranged to move the roller carrier relative to the support to bring the forming rollers into contact with the outer layer of the charge.

11. The apparatus of claim 10, wherein each forming roller is mounted to the roller carrier by a flexible mount which enables an axis of rotation of the forming roller to move relative to the roller carrier and relative to the other forming rollers.

12. The apparatus of any of claims to 9 to 11, wherein each forming roller can rotate independently of the other forming rollers.

## Patentansprüche

1. Verfahren zum Formen einer Füllung, wobei die Füllung eine Vielzahl von Schichten eines faserverstärkten Verbundmaterials umfasst, wobei das Verfahren umfasst:
Einklemmen eines ersten Teils (21) der Füllung mit einer Klemme (7), wobei ein freier Teil (22) der Füllung von der Klemme zu einer freien Kante hervorsteht,
Kontaktieren des freien Teils der Fülling mit einer Formungsrolle (14) und
Vorwärtsbewegen der Formungsrolle über eine Pressform (1) derart, dass sie den freien Teil der Füllung über eine konvexe Ecke (4) der Pressform biegt,
wobei sich die Formungsrolle, wenn sie sich über die Pressform vorwärtsbewegt, um eine Drehachse dreht, die sich ebenfalls über die Pressform vorwärtsbewegt, und
wobei die Füllung eine Außenschicht (23) und eine Innenschicht (24) umfasst, wobei die Vielzahl von Schichten des faserverstärkten Materials zwischen der Innenschicht und der Außenschicht angeordnet ist, und die Formungsrolle (14) eine erste Biegung (30) mit der Außenschicht auf der Außenseite der ersten Biegung formt, wenn sie den freien Teil der Füllung über die konvexe Ecke der Pressform biegt, wobei die Formungsrolle, wenn sie sich über die Pressform vorwärtsbewegt, den freien Teil der Füllung gegen eine Formungsfläche (2) der Pressform presst, und wobei das Verfahren ferner umfasst:
Kontaktieren der Innenschicht mit einer Führung (15),
Biegen des freien Teils der Füllung weg von der Formungsfläche der Pressform, um eine zweite Biegung (31) mit der Innenschicht auf einer Außenseite der zweiten Biegung zu formen, und
gleichzeitiges Vorwärtsbewegen der Formungsrolle (14) und der Führung (15) über die Pressform, so dass sie den freien Teil der Füllung fortschreitend über die Formungsfläche ziehen, die Formungsrolle die Innenschicht der Füllung gegen die Formungsfläche presst und sich die zweite Biegung hin zur freien Kante bewegt.

2. Verfahren nach Anspruch 1, wobei die Führung eine Führungsrolle (15) umfasst und sich die Führungsrolle, wenn sie sich über die Pressform vorwärtsbewegt, um eine Drehachse dreht, welche sich ebenfalls über die Pressform vorwärtsbewegt.

3. Verfahren nach Anspruch 1 oder 2, wobei die Formungsrolle (14), wenn sie sich über die Pressform vorwärtsbewegt, den freien Teil der Füllung von der konvexen Ecke der Pressform zur freien Kante der Füllung gegen die Formungsfläche der Pressform presst.

4. Verfahren nach einem der Ansprüche 1 bis 3, wobei das Verfahren umfasst:
Kontaktieren des freien Teils der Füllung mit einer Vielzahl von Formungsrollen (114) und
gleichzeitiges Vorwärtsbewegen der Formungsrollen derart, dass sie den freien Teil der Füllung über die konvexe Ecke der Pressform biegen und den freien Teil der Füllung gegen die Formungsfläche pressen,
wobei sich jede Formungsrolle, wenn sie sich über die Pressform vorwärtsbewegt, um eine Drehachse bewegt, welche sich ebenfalls über die Pressform vorwärtsbewegt, und
wobei wenigstens eine der Formungsrollen relativ zu den anderen Formungsrollen bewegt, wenn sie den freien Teil der Füllung gegen die Formungsfläche der Pressform pressen.

5. Verfahren nach einem der vorherigen Ansprüche, ferner umfassend das Erwärmen der Füllung, wenn sich die Formungsrolle über die Pressform vorwärtsbewegt.

6. Verfahren nach einem der vorherigen Ansprüche, ferner umfassend das Vorerwärmen des freien Teils der Füllung, bevor er über die konvexe Ecke (4) der Pressform gebogen wird.

7. Verfahren nach einem der vorherigen Ansprüche, wobei die Vielzahl von Schichten des faserverstärkten Verbundmaterials vier oder mehr Schichten an faserverstärktem Verbundmaterial umfasst.

8. Vorrichtung zum Formen einer Füllung durch das Verfahren nach Anspruch 1, wobei die Vorrichtung umfasst:
eine Klemme zum Einklemmen (7) des ersten Teils der Füllung,
eine Halterung (10),
eine Formungsrolle (14), die von der Halterung getragen wird,
ein Formungsrollenstellglied (12), das dazu beschaffen ist, die Formungsrolle relativ zur Halterung zu bewegen, um die Formungsrolle in Kontakt mit einer Außenschicht der Füllung zu bringen,
eine Pressform (1) mit einer konvexen Ecke und einer Formungsfläche und
ein Halterungsstellglied (16), das dazu beschaffen ist, die Halterung über die Pressform zu bewegen, um die Füllung zu formen, ferner umfassend
eine Führung (15), die von der Halterung getragen wird,
ein Führungsstellglied, das dazu beschaffen ist, die Führung relativ zur Halterung zu bewegen, um die Führung in Kontakt mit einer Innenschicht der Füllung zu bringen,
**dadurch gekennzeichnet, dass** sich das Formungsrollenstellglied (12) vom Halterungsstellglied (16) unterscheidet.

9. Vorrichtung nach Anspruch 8, umfassend eine Vielzahl von Formungsrollen (114), die von der Halterung getragen werden.

10. Vorrichtung nach Anspruch 9, wobei die Vielzahl von Formungsrollen an einem Rollenträger getragen werden, der von der Halterung getragen wird, und das Formungsrollenstellglied dazu beschaffen ist, den Rollenträger relativ zur Halterung zu bewegen, um die Formungsrollen in Kontakt mit der Außenschicht der Füllung zu bringen.

11. Vorrichtung nach Anspruch 10, wobei jede Formungsrolle am Rollenträger über eine flexible Befestigung befestigt ist, welche es ermöglicht, dass sich eine Drehachse der Formungsrolle relativ zum Rollenträger und relativ zu den anderen Formungsrollen bewegt.

12. Vorrichtung nach einem der Ansprüche 9 bis 11, wobei sich jede Formungsrolle unabhängig von den anderen Formungsrollen drehen kann.

## Revendications

1. Procédé de formation d'une charge, la charge comprenant plusieurs couches de matériau composite renforcé de fibres, le procédé comprenant :
le serrage d'une première partie (21) de la charge avec une pince (7), une partie libre (22) de la charge dépassant de la pince vers un bord libre,
la mise en contact de la partie libre de la charge avec un rouleau de formage (14) et
l'avancement du rouleau de formage à travers une matrice (1) de manière à couder la partie libre de la charge autour d'un angle convexe (4) de la matrice,
procédé, dans lequel le rouleau de formage, en avançant à travers la matrice, tourne autour d'un axe de rotation qui avance également à travers la matrice, et
dans lequel la charge comprend une couche externe (23) et une couche interne (24), les plusieurs des couches de matériau composite renforcé par des fibres sont positionnées entre les couches interne et externe et le rouleau de formage (14) forme un premier coude (30) avec la couche externe à l'extérieur du premier coude, quand il coude la partie libre de la charge autour de l'angle convexe de la matrice,
dans lequel, le rouleau de formage, en avançant à travers la matrice, presse la partie libre de la charge contre une surface de moulage (2) de la matrice, et le procédé comprenant en plus :
la mise en contact de la couche interne avec un élément de guidage (15),
le coudage de la partie libre de la charge de manière qu'elle s'éloigne de la surface de moulage de la matrice pour former un second coude (31) avec la couche interne à l'extérieur du second coude, et
l'avancement simultané du rouleau de formage (14) et de l'élément de guidage (15) à travers la matrice de manière qu'ils tirent progressivement la partie libre de la charge à travers la surface de moulage, le rouleau de formage pressant la couche interne de la charge contre la surface de moulage et le second coude se déplace vers le bord libre.

2. Procédé suivant la revendication 1, dans lequel l'élément de guidage comprend un rouleau de guidage (1) et, en avançant à travers la matrice, le rouleau de guidage tourne autour d'un axe de rotation qui avance également à travers la matrice.

3. Procédé suivant la revendication 1 ou 2, dans lequel le rouleau de formage (14), en avançant à travers la matrice, presse la partie libre de la charge contre la surface de moulage de la matrice depuis l'angle convexe de la matrice vers le bord libre de la charge.

4. Procédé suivant une des revendications 1 à 3, le procédé comprenant :
la mise en contact de la partie libre de la charge avec les plusieurs rouleaux de formage (114) et
l'avancement simultané des rouleaux de formage de manière qu'ils coudent la partie libre de la charge autour de l'angle convexe d'une matrice et pressent la partie libre de la charge contre la surface de moulage de la matrice,
en avançant à travers la matrice, chaque rouleau de formage tourne autour d'un axe de rotation qui avance également à travers la matrice, et
au moins un des rouleaux de formage se déplace par rapport aux autres rouleaux de formage quand ils pressent la partie libre de la charge contre la surface de moulage.

5. Procédé suivant une des revendications précédentes, le procédé comprenant en plus le chauffage de la charge quand le rouleau de formage avance à travers la matrice.

6. Procédé suivant une des revendications précédentes, le procédé comprenant en plus le préchauffage de la partie libre de la charge avant qu'elle soit coudée autour de l'angle convexe (4) de la matrice.

7. Procédé suivant une des revendications précédentes, dans lequel les plusieurs couches de matériau composite renforcé de fibres comprennent quatre couches ou plus de matériau composite renforcé de fibres.

8. Appareil de formage d'une charge au moyen du procédé suivant la revendication 1, l'appareil comprenant :
une pince (7) pour le serrage de la première partie de la charge,
un support (10),
un rouleau de formage (14) porté par le support,
un actionneur de rouleau de formage (12) conçu pour déplacer le rouleau de formage par rapport au support afin de mettre le rouleau de formage en contact avec une couche externe de la charge,
une matrice (1) avec un angle convexe et une surface de moulage, et
un actionneur de support (16) conçu pour déplacer le support à travers la matrice afin de former la charge, comprenant en plus :
un élément de guidage (15) porté par le support, et
un actionneur d'élément de guidage conçu pour déplacer l'élément de guidage par rapport au support afin de mettre l'élément de guidage en contact avec une couche interne de la charge **caractérisé en ce que** l'actionneur du rouleau de formage (12) est différent de l'actionneur du support (16).

9. Appareil suivant la revendication 8 comprenant plusieurs rouleaux de formage (114) portés par le support.

10. Appareil suivant la revendication 9, dans lequel les plusieurs rouleaux de formage sont montés sur un porte-rouleaux qui est porté par le support, et l'actionneur du rouleau de formage est conçu pour déplacer le porte-rouleaux par rapport au support afin de mettre les rouleaux de formage en contact avec la couche externe de la charge.

11. Appareil suivant la revendication 10, dans lequel chaque rouleau de formage est monté sur le porte-rouleaux par l'intermédiaire d'une monture flexible qui permet à un axe de rotation du rouleau de formage de se déplacer par rapport au porte-rouleaux et par rapport aux autres rouleaux de formage.

12. Appareil suivant une des revendications 9 à 11, dans lequel chaque rouleau de formage peut tourner indépendamment des autres rouleaux de formage.
